# FASCICULE DE BREVET EUROPEEN

(11) **EP 1 910 137 B1**
(45) Date de publication et mention de la délivrance du brevet: **25.02.2009**
(21) Numéro de dépôt: 06794202.9
(22) Date de dépôt: 24.07.2006
(51) Int. Cl.: B60R 22/03

(54) **DISPOSITIF D'ASSISTANCE A LA PREHENSION DE CEINTURE DE SECURITE, ET VEHICULE AUTOMOBILE MUNI D'UN TEL DISPOSITIF**
VORRICHTUNG ZUR HILFE BEIM ERGREIFEN EINES SICHERHEITSGURTES UND DAMIT AUSGESTATTETES KRAFTFAHRZEUG
DEVICE FOR ASSISTING GRIPPING OF A SAFETY BELT AND MOTOR VEHICLE EQUIPPED WITH SAME

(30) Priorité: 29.07.2005 FR 0508164
(43) Date de publication de la demande: 16.04.2008
(73) Titulaire: Nonat, Daniel, 91860 Epinay sous Senart (FR)
(72) Inventeur: Nonat, Daniel, 91860 Epinay sous Senart (FR)
(74) Mandataire: Cabinet Plasseraud
(86) Numéro de dépôt international: PCT/FR2006/001802
(87) Numéro de publication internationale: WO 2007/012743

(56) Documents cités:
- EP-A- 0 149 728
- EP-A- 1 357 002
- DE-A1- 3 702 976
- JP-A- 1 030 857

## Description

La présente invention est relative aux dispositifs d'assistance à la préhension de ceinture de sécurité, et aux véhicules automobiles munis de tels dispositifs.

Plus particulièrement, l'invention se rapporte principalement à un dispositif d'assistance à la préhension de la ceinture de sécurité d'un véhicule automobile comprenant un habitacle, ledit dispositif d'assistance comprenant :
- une base adaptée pour être fixée à l'habitacle,
- un tube souple extensible s'étendant entre une première extrémité portée par la base et une deuxième extrémité obturée reliée à la ceinture de sécurité,
la première extrémité étant adaptée pour recevoir un gaz comprimé à une pression supérieure à la pression atmosphérique.

Le document EP-A-0 149 728 décrit un exemple d'un tel dispositif d'assistance. Toutefois, un tel dispositif d'assistance est problématique à mettre en oeuvre. En effet, une force importante doit être générée pour déplacer la ceinture de sécurité qui, classiquement, est soumise à l'action d'un enrouleur dans sa position de repos. Il s'agit donc dans ce document d'utiliser des éléments supportant de forts niveaux de contrainte. Par exemple, la base sera rapportée directement sur la structure rigide de l'habitacle du véhicule, ce qui nuit à l'intégrité de l'habitacle, ce qui est nécessairement préjudiciable à la sécurité de l'occupant.

La présente invention a notamment pour but de pallier ces inconvénients.

A cet effet, selon l'invention, un dispositif d'assistance du genre en question est caractérisé en ce que le tube est adapté pour se déployer sous l'effet dudit gaz comprimé, entre sa première extrémité et sa deuxième extrémité retenue par ladite ceinture au cours du gonflage, jusqu'à atteindre une position de préhension dans laquelle un occupant peut attraper le tube pour attirer à lui la ceinture de sécurité.

Grâce à ces dispositions, il ne s'agit pas directement de déplacer la ceinture de sécurité, mais de fournir à l'occupant une bretelle sur laquelle il pourra tirer pour amener à lui la ceinture. Par conséquent, un tel dispositif d'assistance peut être posé dans l'habitacle sans atteinte à l'intégralité structurelle du véhicule, voire même de manière amovible. Léger (par exemple de masse inférieure à 100 grammes), le système peut être alimenté depuis le circuit électrique du véhicule.

Dans des modes de réalisation préférés de l'invention, on peut éventuellement avoir recours en outre à l'une et/ou à l'autre des dispositions suivante
- le tube est un tube souple extensible élastiquement, le tube s'étendant élastiquement sous l'effet du gaz comprimé ;
- le dispositif comprend un système d'arrivée de gaz débouchant sur ladite première extrémité pour délivrer le gaz à celle-ci ;
- le système d'arrivée de gaz présente une extrémité à proximité de ladite première extrémité du tube, ladite extrémité étant coudée ;
- la base porte un dispositif d'orientation auquel est reliée la première extrémité du tube, l'orientation et/ou la torsion de la première extrémité par rapport à la base étant réglable au niveau du dispositif d'orientation ;
- le tube présente une extension élastique au moins égale à 200%, de préférence au moins égale à 300% ;
- le dispositif comprend un système de génération de gaz comprimé ;
- le système de génération de gaz comprimé comprend :

- un compresseur adapté pour délivrer un gaz comprimé en direction de la première extrémité du tube,
- une électrovanne pouvant prendre une condition fermée dans laquelle le gaz est retenu dans le tube, et une condition ouverte dans laquelle le gaz retenu est libéré vers l'extérieur, et
- une unité de commande adaptée pour commander le compresseur pour délivrer le gaz comprimé au tube, et l'électrovanne vers sa condition fermée pour retenir le gaz dans le tube ;
- l'unité de commande comporte :

- un récepteur adapté pour recevoir une instruction de déclenchement d'un utilisateur, le récepteur étant adapté pour déclencher le compresseur, et
- une minuterie, la minuterie étant adaptée pour commander l'ouverture de l'électrovanne au bout d'un temps auquel un déploiement du tube suffisant a été obtenu ;
- le récepteur est un récepteur radio, et l'unité de commande comporte un émetteur radio coopérant avec le récepteur radio, et actionnable par l'utilisateur pour transmettre un signal de commande au récepteur radio ;
- le système de génération de gaz comprimé est adapté pour être alimenté électriquement à partir du circuit électrique du véhicule.

Selon un autre aspect, l'invention se rapporte à un véhicule automobile comprenant un habitacle, au moins un siège de véhicule automobile, une ceinture de sécurité pour le siège, au moins un tel dispositif d'assistance, dont la base est fixée à l'habitacle et la deuxième extrémité du tube est reliée à la ceinture de sécurité.

Dans des modes de réalisation, on peut en outre mettre en oeuvre l'une et/ou l'autre des caractéristiques suivantes :
- l'habitacle comporte une structure rigide et la base est fixée de manière amovible à la structure rigide ;
- l'habitacle comporte un montant latéral interne jouxtant le siège de véhicule, ledit siège de véhicule étant orienté vers l'avant, la base est fixée au montant latéral interne,
une première portion du tube comportant la première extrémité est orientée principalement vers l'avant, et dans sa position de repos, le tube s'étend principalement vers le bas jusqu'à sa deuxième extrémité reliée à la ceinture,
dans la position de gonflage, le tube est située dans une position plus avancée que dans sa position de repos ;
- la première portion du tube est également orientée latéralement vers l'extérieur du véhicule ;
- la ceinture de sécurité comporte une boucle reposant sur un pion d'arrêt, et la deuxième extrémité du tube comporte un passant dans lequel la ceinture de sécurité est insérée, ledit passant reposant sur la boucle lorsque la ceinture de sécurité est détachée.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique de côté d'un véhicule automobile, prise depuis l'intérieur du véhicule,
- la figure 2 est un vue schématique de côté d'un dispositif d'assistance dont le tube est en position de repos (trait plein) et en position de préhension (trait pointillé),
- la figure 3 est un schéma représentatif d'un système de génération de gaz comprimé, et
- la figure 4 est une vue schématique correspondant à la figure 1 quand la ceinture de sécurité est attachée.

Sur les différentes figures, les mêmes références désignent des éléments identiques ou similaires.

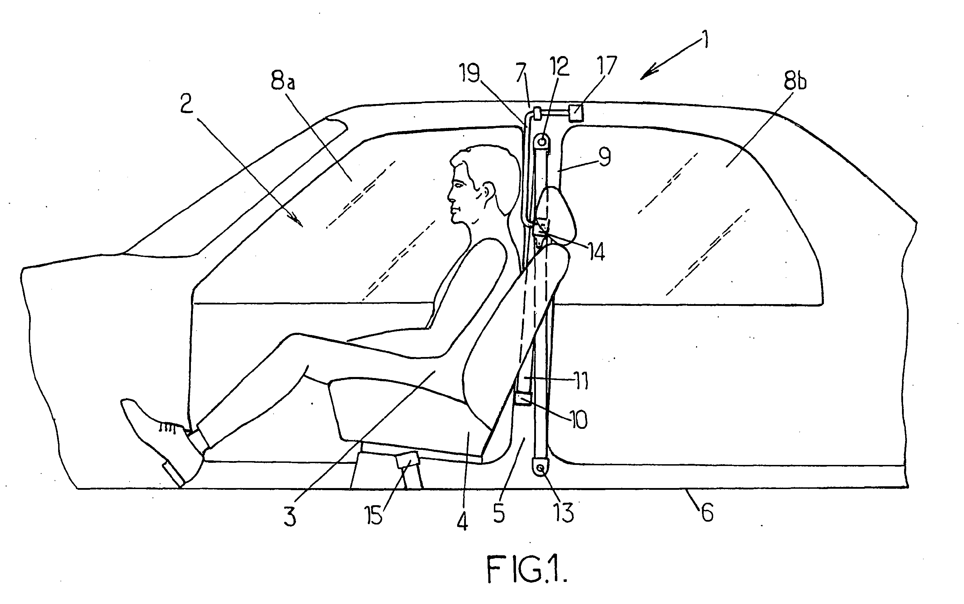

Sur la figure 1 est représenté un véhicule automobile 1, en vue de côté prise par exemple de l'intérieur du véhicule, par exemple d'un siège avant gauche du véhicule. Un tel véhicule automobile comporte généralement un habitacle 2 dans lequel peut prendre place l'occupant 3 du véhicule automobile, assis sur un siège 4 du véhicule. Un tel habitacle 2 est généralement réalisé à partir d'une structure rigide d'acier comprenant par exemple un montant métallique 5 représenté schématiquement sur la figure 1 s'étendant du plancher 6 au plafond 7 du véhicule entre les fenêtres 8a, 8b du véhicule.

Un tel montant 5 peut être recouvert d'un habillage 9 plastique ou textile ou autre, qui forme la paroi interne du véhicule visible de l'occupant 3.

L'habitacle 2 comporte également un module de ceinture de sécurité pour le siège du véhicule 4, qui comporte un réceptacle 10 de ceinture de sécurité à partir duquel s'étend une ceinture de sécurité 11 jusqu'à un point d'ancrage haut 12 rapporté sur le montant 5, puis un point d'ancrage bas 13 situé sensiblement à la verticale du point d'ancrage haut 12. La ceinture de sécurité 11 porte une boucle 14 adaptée pour s'ancrer dans un pédoncule 15 de ceinture de sécurité situé sur le côté opposé du siège, de manière à retenir l'occupant 3 dans le siège en cas de choc automobile. La boucle 14 est retenue en positon par un pion d'arrêt non visible sur la figure 1, de manière connue.

Dans la position non attachée de la ceinture de sécurité 11, représentée sur la figure 1, un enrouleur disposé dans le réceptacle 10 sollicite la ceinture de sécurité 11 de manière tendue le long de la paroi interne de l'habitacle 2.

Le montant 5 reçoit un dispositif d'assistance à la préhension de la ceinture de sécurité 11, qui sera décrit plus en détail par la suite.

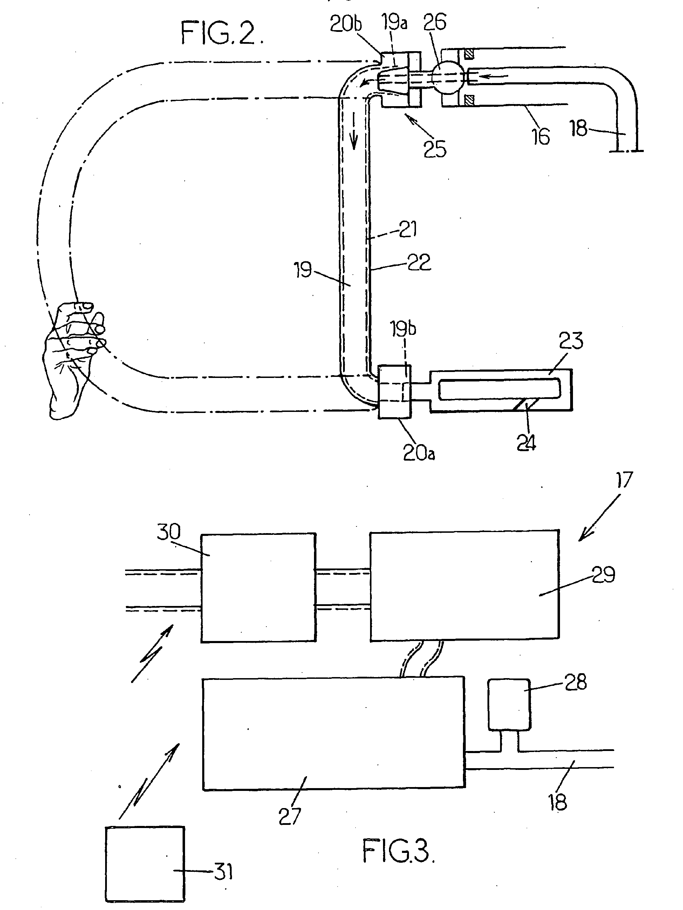

Comme représenté sur la figure 2, le dispositif d'assistance comporte une base 16 destinée à être fixée au montant, sans porter atteinte à l'intégrité structurelle de celui-ci. Par exemple, la base 16 pourra être réalisée de manière magnétique pour être posée directement sur une paroi interne métallique du véhicule. Un système de fixation par collage est également envisageable. La base 16 peut également être vissée ou crochetée sur un habillage plastique de l'intérieur du véhicule. De tels systèmes de fixation permettent d'envisager de réaliser la base 16 de manière amovible, par exemple afin d'adapter sa position dans le véhicule, ou même de rendre le dispositif d'assistance installable sur différents véhicules. La base 16 reçoit un gaz comprimé, tel que de l'air comprimé, depuis un système de génération de gaz comprimé 17 dont un exemple sera décrit par la suite plus en détail en relation avec la figure 3.

Le gaz comprimé arrivant à la base 16 depuis un tuyau d'arrivée de gaz 18 est transmis à un tube 19, qui s'étend d'une première extrémité 19a en communication fluide avec l'extrémité du tuyau d'arrivée de gaz 18, et une deuxième extrémité 19b obturée par exemple par un embout plastique de deuxième extrémité 20a. Le tube 19 est réalisé dans un matériau souple, flexible mais résistant, présentant une extension élastique au moins égale à 200%, et de préférence au moins égale à 300%, adaptée pour s'étendre élastiquement sous l'effet de l'arrivée du gaz comprimé.

On prévoit par exemple de réaliser le tube 19 d'une chambre à air en latex 21 interne doublée d'une gaine textile extensible 22 externe réalisée par exemple sous la forme d'une gaine tubulaire tissée sur un métier navette (sans couture) composée de fils textiles tissés avec des fils de latex incorporés longitudinalement pour fournir une extensibilité adéquate.

Une telle gaine 22 protège la chambre à air en latex 21 des rayonnements ultra violets. Le prototype réalisé, de 0,6 millimètre d'épaisseur, de diamètre 12/6, permet d'obtenir un tube 19 de masse très faible, présentant une extension élastique de 280%, de durée de vie au moins égale à 5000 cycles.

On peut en outre prévoir de recouvrir la gaine 22 d'une housse anti-ultra-violets (non représentée) protégeant les fils latex de la gaine 22 des ultra-violets. Cette housse est par exemple réalisée en un textile faiblement extensible ultra-léger de la longueur du tube 19 en extension. Lorsque le tube est au repos, la housse présente alors un aspect en soufflet d'accordéon, permettant par son « gonflant », de fournir une barrière de protection thermique pour le tube.

La longueur du tube au repos est déterminée en fonction des critères suivants :
- développement vers l'avant d'une grandeur donnée, par exemple de l'ordre de 280 mm à 350 mm, nécessaire pour répondre au besoin attendu d'assistance, et
- dimension au repos présentant un faible encombrement pour l'utilisateur.

En fonction de la longueur du tube, l'extensibilité est déterminée en fonction des critères suivants :
- suffisante pour obtenir le développement souhaité,
- pouvant permettre une mise en pression suffisante pour la préhension.

Toutefois, l'invention n'est pas limitée à la réalisation ici présentée, et on pourra utiliser tous matériaux constituant le tube 19 permettant d'obtenir une extension élastique du niveau souhaité, une longévité donnée, et/ou un retour élastique à la condition de repos satisfaisant.

La deuxième extrémité 19b du tube est obturée, par l'embout 20a, qui porte un passant 23 dans lequel s'insère la ceinture de sécurité 11 par l'ouverture 24. Le passant 23 repose sur la boucle 14 de ceinture de sécurité, reposant elle-même sur un pion d'arrêt. Afin de garantir une position suffisamment haute de la boucle, lors de l'installation du système d'assistance ici décrit dans un véhicule, dans lequel la boucle est classiquement retenue assez bas par un pion d'arrêt, on peut prévoir de rajouter, au-dessus du pion d'arrêt existant, un pion d'arrêt suffisamment haut, sur laquelle repose la boucle qui, elle-même, supporte le passant.

La base 16 est fixée dans le véhicule de sorte que la première portion, comportant la première extrémité 19a du tube soit orientée au moins vers l'avant du véhicule en direction de l'occupant 2.

Lors de l'arrivée d'air comprimé via le tuyau d'arrivée de gaz 18, le tube 19 s'étend jusqu'à la position de préhension représentée en pointillé sur la figure 2, dans laquelle l'occupant 3 peut attraper le tube 19 pour attirer à lui la ceinture de sécurité. Au cours du gonflage, le tube 19 ne déplace quasiment pas la ceinture de sécurité 11, qui reste tendue sous l'effet de l'enrouleur. Par conséquent, la deuxième extrémité 19b est sensiblement retenue par la ceinture 11 au cours du gonflage.

Comme représenté sur la figure 2, le dispositif d'assistance peut également comporter un dispositif d'orientation 25 porté par la base 16, par exemple réalisé sous la forme d'une rotule 26 rotative par rapport à la base 16, et maintenue en place par friction sur celle-ci au cours du gonflage. Bien entendu, la rotule 26 est percée pour garder la communication fluide entre le tuyau 18 et le tube 19.

Ce dispositif d'orientation 25 permet à chaque utilisateur de positionner le dispositif d'assistance à sa convenance dans le véhicule 1. Ceci permet d'obtenir, lors du gonflage, un développement géométrique du tube dans l'espace qui soit optimal pour l'utilisateur.

En effet, la base 16 peut être fixée proche du plafond 7 du véhicule. Du fait de la forme généralement incurvée vers l'intérieur de la paroi interne de l'habitacle, le tube 19 risquerait une collision avec l'occupant 3 lors du gonflage. Pour éviter ceci, on peut prévoir que la première portion comportant la première extrémité 19a du tube 19 sera orientée légèrement latéralement vers l'extérieur, par exemple en réalisant la liaison entre le tuyau d'arrivée de gaz 18 et le tube 19 de manière coudée vers l'extérieur, afin de permettre le déploiement du tube 19 de manière optimale entre l'occupant 3 et la paroi interne de l'habitacle.

D'autre part, dû à l'élasticité naturelle du latex formant la chambre à air 21, et la façon dont il est fixé sur les embouts 20a et 20b, le gonflage peut entraîner un léger vrillage du tube 19 de sorte que celui-ci ne se gonfle pas directement vers l'avant, mais se déploie légèrement de manière latérale au cours du gonflage. Pour compenser avec cette déviation latérale, le dispositif d'orientation peut être soumis à une rotation (torsion) autour de l'axe longitudinal du tube par rapport à la base. Ainsi, le positionnement de l'embout peut être adapté pour générer sur le tube une torsion s'opposant au vrillage naturel du tube lors de son déploiement, et compenser la déviation naturelle observée.

Les embouts peuvent être réalisés en plastique de manière à ne pas blesser le tube par cisaillement.

A la place du dispositif d'orientation représenté sur la figure 2, on pourrait simplement prévoir une liaison fixe directe entre le tuyau souple d'arrivée de gaz 18 et le tube 19.

Comme représenté sur la figure 3, le système de génération de gaz comprimé 17 peut être réalisé comme un boîtier de faible dimension relié en sortie au tuyau 18 d'arrivée de gaz délivrant l'air comprimé au tube 19.

Le système de génération de gaz comprimé 17 comprend un compresseur 27 ou une pompe à air capable de fournir une pression d'au moins 1,5 bar à un débit d'au moins 3 litres par minute. On choisira de préférence un compresseur 27 pouvant être alimenté à partir du système électrique du véhicule, éventuellement via un transformateur, par exemple relié à l'allume-cigare du véhicule, ou relié de toute autre manière adaptée au circuit électrique du véhicule. Un tel compresseur est par exemple un compresseur RIETSCHLE THOMAS choisi pour sa fiabilité et son faible encombrement. Le système 17 comprend également une électrovanne de décharge 28 (par exemple de marque KOGE) pouvant prendre une condition fermée et une condition ouverte, dans laquelle l'air comprimé présent dans le tube est déchargé vers l'extérieur. Le système 17 peut également comprendre une minuterie 29 et un récepteur 30 adapté pour recevoir une commande de la part de l'occupant 3 du siège. Le récepteur 30 est par exemple un récepteur radio correspondant à un émetteur radio 31 commandé par l'occupant 3.

Le système qui vient d'être décrit fonctionne comme suit.

Lorsque l'occupant 3 désire mettre en oeuvre le dispositif d'assistance, il émet une commande depuis l'émetteur radio 31, à destination du récepteur radio 30 qui déclenche le fonctionnement du compresseur 27, et la fermeture de l'électrovanne 28. Le récepteur radio 30 déclenche également la minuterie 29, qui est adaptée pour ouvrir l'électrovanne 28 au bout d'un certain temps donné préprogrammé, qui correspond au temps au bout duquel une pression suffisante est obtenue dans le tube, en pratique quelques secondes. Sous l'action du compresseur, l'air est délivré au tube 19 qui se déploie et s'étend, sous l'effet de l'air comprimé, sa deuxième extrémité 19b restant sensiblement en place lors du gonflage, du fait de la tension de la ceinture de sécurité 11, et du fait que le passant 23 repose sur la boucle 14 de ceinture de sécurité, qui elle-même repose sur le pion d'arrêt, de manière connue. En position de préhension représentée sur la figure 2, en pointillé, l'occupant 3 peut attraper le tube 19 arrivé en position de préhension à ses côtés, sans avoir à se retourner sur son siège ou à fournir un effort excessif, et tirer le tube 19 à lui, ce qui entraîne également la ceinture de sécurité 11 reliée au tube par la l'intermédiaire du passant 23.

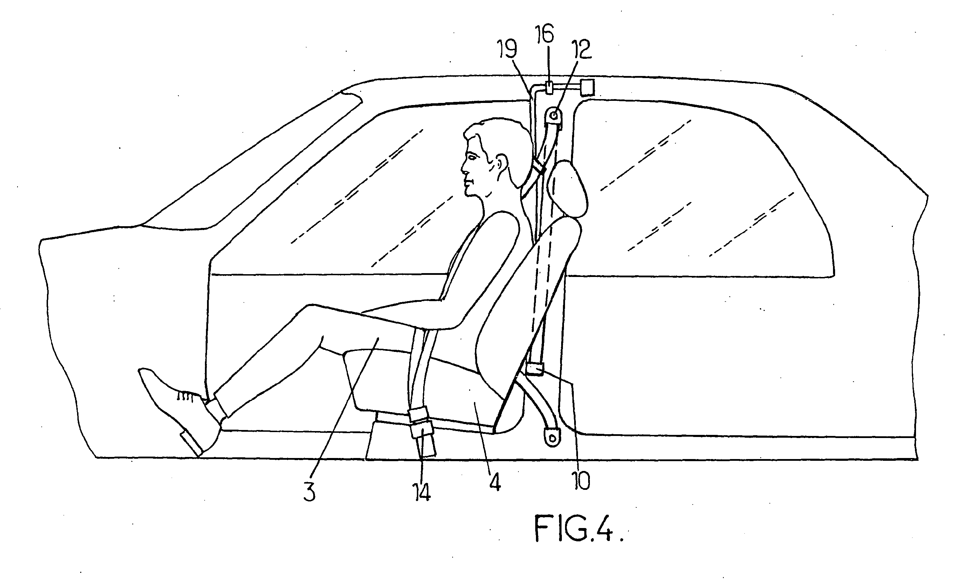

Pouvant alors attraper la ceinture, l'occupant 3 peut verrouiller celle-ci, comme représenté sur la figure 4. A cet instant, la minuterie interrompt l'alimentation électrique, ce qui commande à la fois l'arrêt du compresseur et l'ouverture de l'électrovanne de sorte que le tube 19 se dégonfle, et revient automatiquement dans la position de repos représentée sur la figure 4, sans gêner l'occupant 3 dans cette position.

L'extensibilité de la gaine seule permet par effet mécanique son retour à la position de repos en remontant avec le passant le long de la ceinture pendant que l'utilisateur verrouille sa ceinture.

On notera que la minuterie pourrait, en variante, être adaptée pour couper, dans un premier temps l'alimentation au compresseur puis, dans un deuxième temps, celle à l'électrovanne.

Le même système de génération d'air comprimé peut également servir pour fournir l'assistance à la préhension de la ceinture de sécurité à d'autres occupants du véhicule, par exemple à l'aide d'une vanne 28 multivoie, et d'émetteurs/récepteurs doublés ou multicanaux.

On notera qu'en alternative au tube souple extensible présenté, on pourra utiliser un tube souple non-extensible, par exemple réalisé par des fourreaux de matière plastique souple, formant une boucle pendant le long de la paroi interne dans la position de repos, et se tendant en se déployant sous l'effet du gaz comprimé.

On notera que le système offre une grande liberté d'utilisation, car l'occupant reste libre d'utiliser ou non le dispositif d'assistance.

## Revendications

1. Dispositif d'assistance à la préhension de la ceinture de sécurité d'un véhicule automobile comprenant un habitacle, ledit dispositif d'assistance comprenant :
- une base (16) adaptée pour être fixée à l'habitacle (2),
- un tube souple (19) s'étendant entre une première extrémité portée par la base et une deuxième extrémité obturée reliée à la ceinture de sécurité (11),
la première extrémité étant adaptée pour recevoir un gaz comprimé à une pression supérieure à la pression atmosphérique,
**caractérisé en ce que** le tube est adapté pour se déployer sous l'effet dudit gaz comprimé, entre sa première extrémité (19a) et sa deuxième extrémité retenue par ladite ceinture au cours du gonflage, jusqu'à atteindre une position de préhension dans laquelle un occupant peut attraper le tube (19) pour attirer à lui la ceinture de sécurité.

2. Dispositif d'assistance selon la revendication 1, dans lequel le tube souple (19) est un tube souple extensible élastiquement, le tube s'étendant élastiquement sous l'effet dudit gaz comprimé.

3. Dispositif d'assistance selon la revendication 1 ou la revendication 2, comprenant en outre un système d'arrivée de gaz (18) débouchant sur ladite première extrémité (19a) pour délivrer le gaz à celle-ci.

4. Dispositif d'assistance selon la revendication 3, dans lequel le système d'arrivée de gaz (18) présente une extrémité à proximité de ladite première extrémité du tube, ladite extrémité étant coudée.

5. Dispositif d'assistance selon l'une des revendications précédentes, dans lequel la base (16) porte un dispositif d'orientation (25) auquel est reliée, la première extrémité (19a) du tube, l'orientation et/ou la torsion de la première extrémité par rapport à la base étant réglable au niveau du dispositif d'orientation.

6. Dispositif d'assistance selon l'une des revendications 2 à 5, dans lequel le tube (19) présente une extension élastique au moins égale à 200%, de préférence au moins égale à 300%.

7. Dispositif d'assistance selon l'une des revendications précédentes, comprenant en outre un système (17) de génération de gaz comprimé.

8. Dispositif d'assistance selon la revendication 7, dans lequel le système de génération de gaz comprimé comprend :
- un compresseur (27) adapté pour délivrer un gaz comprimé en direction de la première extrémité du tube,
- une électrovanne (28) pouvant prendre une condition fermée dans laquelle le gaz est retenu dans le tube, et une condition ouverte dans laquelle le gaz est libéré vers l'extérieur, et
- une unité de commande (29, 30) adaptée pour commander le compresseur pour délivrer le gaz comprimé au tube et l'électrovanne vers sa condition fermée pour retenir le gaz dans le tube.

9. Dispositif d'assistance selon la revendication 8 dans lequel l'unité de commande comporte :
- un récepteur (30) adapté pour recevoir une instruction de déclenchement d'un utilisateur, le récepteur étant adapté pour déclencher le compresseur, et
- une minuterie (29), la minuterie étant adaptée pour commander l'ouverture de l'électrovanne au bout d'un temps auquel un déploiement du tube suffisant a été obtenu.

10. Dispositif d'assistance selon la revendication 9 dans lequel le récepteur (30) est un récepteur radio, et dans lequel l'unité de commande comporte un émetteur radio (31) coopérant avec le récepteur radio, et actionnable par l'utilisateur pour transmettre un signal de commande au récepteur radio.

11. Dispositif d'assistance selon l'une des revendications 7 à 10 dans lequel le système (17) de génération de gaz comprimé est adapté pour être alimenté électriquement à partir du circuit électrique du véhicule.

12. Véhicule automobile comprenant un habitacle (2), au moins un siège (4) de véhicule automobile, une ceinture de sécurité (11) pour le siège, au moins un dispositif d'assistance selon l'une des revendications précédentes, dont la base (16) est fixée à l'habitacle et la deuxième extrémité du tube est reliée à la ceinture de sécurité (11).

13. Véhicule selon la revendication 12, dans lequel l'habitacle comporte une structure rigide (5) et dans lequel la base est fixée de manière amovible à la structure rigide.

14. Véhicule automobile selon la revendication 12 ou la revendication 13, dans lequel l'habitacle comporte un montant latéral interne (5) jouxtant le siège de véhicule, ledit siège de véhicule étant orienté vers l'avant, dans lequel la base est fixée au montant latéral interne (5),
dans lequel une première portion du tube comportant la première extrémité (19a) est orientée principalement vers l'avant, et dans sa position de repos, le tube s'étend principalement vers le bas jusqu'à sa deuxième extrémité (19b) reliée à la ceinture,
dans lequel dans la position de préhension, le tube est située dans une position plus avancée que dans sa position de repos.

15. Véhicule automobile selon la revendication 14, dans lequel la première portion de tube est également orientée latéralement vers l'extérieur du véhicule.

16. Véhicule automobile selon l'une des revendications 12 à 15, dans lequel la ceinture de sécurité comporte une boucle reposant sur un pion d'arrêt, et dans lequel la deuxième extrémité du tube comporte un passant (23) dans lequel la ceinture de sécurité est insérée, ledit passant reposant sur la boucle lorsque la ceinture de sécurité est détachée.

## Claims

1. A device for assisting the grasping of the safety belt of a motor vehicle comprising a passenger compartment, said assisting device comprising:
- a base (16) designed to be fixed to the passenger compartment (2);
- a flexible tube (19) extending between a first end carried by the base and a second closed end connected to the safety belt (11);
the first end being designed to receive a compressed gas at a pressure greater than the atmospheric pressure, **characterized in that** the tube is designed to deploy due to the effect of said compressed gas, between its first end (19a) and its second end retained by said belt during the inflation, until it reaches a grasping position in which an occupant can get hold of the tube (19) to pull the safety belt to him.

2. The assisting device as claimed in claim 1, in wich the flexible tube (19) is an elastically extensible flexible tube, the tube extending elastically due to the effect of said compressed gas.

3. The assisting device as claimed in claim 1 or claim 2, also comprising a gas supply system (18) leading to said first end (19a) to deliver the gas to it.

4. The assisting device as claimed in claim 3, in which the gas supply system (18) has an end near said first end of the tube, said end being angled.

5. The assisting device as claimed in one of the preceding claims, in which the base (16) carries an orienting device (25) to which the first end (19a) of the tube is connected, the orientation and/or the torsion of the first end in relation to the base being adjustable at the orienting device.

6. The assisting device as claimed in one of claims 2 to 5, in which the tube (19) has an elastic extension equal to at least 200%, preferably equal to at least 300%.

7. The assisting device as claimed in one of the preceding claims, also comprising a compressed gas generating system (17).

8. The assisting device as claimed in claim 7, in which the compressed gas generating system comprises:
- a compressor (27) designed to deliver a compressed gas in the direction of the first end of the tube;
- a solenoid valve (28) which can have a closed condition in which the gas is retained in the tube, and an open condition in which the gas is released to the outside; and
- a control unit (29, 30) designed to control the compressor to deliver the compressed gas to the tube, and move the solenoid valve to its closed condition to retrain the gas in the tube.

9. The assisting device as claimed in claim 8 in which the control unit includes:
- a receiver (30) designed to receive a triggering instruction from a user, the receiver being designed to switch on the compressor; and
- a timer (29), the timer being designed to control the opening of the solenoid valve at the end of a time at which a sufficient deployment of the tube has been obtained.

10. The assisting device as claimed in claim 9 in which the receiver (30) is a radio receiver, and in which the control unit includes a radio transmitter (31) cooperating with the radio receiver, and able to be operated by the user to transmit a control signal to the radio receiver.

11. The assisting device as claimed in one of claims 7 to 10 in which the compressed gas generating system (17) is designed to be supplied with electric power from the electrical circuit of the vehicle.

12. A motor vehicle comprising a passenger compartment (2), at least one motor vehicle seat (4), a safety belt (11) for the seat, at least one assisting device as claimed in one of the preceding claims, of which the base (16) is fixed to the passenger compartment and the second end of the tube is connected to the safety belt (11).

13. The vehicle as claimed in claim 12, in which the passenger compartment includes a rigid structure (5) and in which the base is fixed to the rigid structure so as to be removable.

14. The motor vehicle as claimed in claim 12 or claim 13, in which the passenger compartment includes an inner side pillar (5) next to the vehicle seat, said vehicle seat being oriented toward the front, in which the base is fixed to the inner side pillar (5), in which a first portion of the tube including the first end (19a) is oriented mainly toward the front, and in its rest position, the tube extends mainly downward to its second end (19b) connected to the belt, in which in the grasping position, the tube is located in a position further forward than its rest position.

15. The motor vehicle as claimed in claim 14, in which the first portion of the tube is also oriented sideways toward the outside of the vehicle.

16. The motor vehicle as claimed in one of claims 12 to IS, in which the safety belt includes a buckle resting on a stop, and in which the second end of the tube includes a strap guide (23) through which the safety belt passes, said strap guide resting on the buckle when the safety belt is unfastened.

## Patentansprüche

1. Vorrichtung zur Hilfe beim Ergreifen des Sicherheitsgurtes eines Kraftfahrzeugs, das einen Fahrgastraum (2) umfasst, wobei die Hilfsvorrichtung umfasst:
- eine Basis (16), die angepasst ist, um im Fahrgastraum (2) befestigt zu werden,
- ein biegsames Rohr (19), das sich zwischen einem ersten, von der Basis getragenen Ende und einem zweiten, verschlossenen, mit dem Sicherheitsgurt (11) verbundenen Ende erstreckt,
wobei das erste Ende angepasst Ist, um ein komprimiertes Gas mit einem Druck oberhalb des Luftdrucks aufzunehmen,
**dadurch gekennzeichnet, dass** das Rohr angepasst ist, um sich zwischen seinem ersten Ende (19a) und selnem zweiten, während des Aufpumpens durch den Gurt festgehaltenen Ende unter der Wirkung des komprimierten Gases auszudehnen, bis es eine Greifposition erreicht, In der ein Insasse das Rohr (19) ergreifen kann, um den Sicherheitsgurt an sich zu ziehen.

2. Hilfsvorrichtung nach Anspruch 1, in der das blegsame Rohr (19) ein biegsames, elastisch dehnbares Rohr ist, wobei sich das Rohr unter der Wirkung des komprimierten Gases ausdehnt.

3. Hilfsvorrichtung nach Anspruch 1 oder Anspruch 2, die ferner ein Gaszuleitungssystem (18) umfasst, das in das erste Ende (19a) mündet, um das Gas in dieses einzuleiten.

4. Hilfsvorrichtung nach Anspruch 3, in der das Gaszuleitungssystem (18) ein Ende in der Nähe des ersten Endes des Rohres aufweist, wobei das Ende abgewinkelt ist.

5. Hilfsvorrichtung nach einem der vorangehenden Ansprüche, in der die Basis (16) eine Ausrichtungsvorrichtung (25) trägt, mit der das erste Ende (19a) des Rohres verbunden Ist, wobei die Ausrichtung und/oder Drehung des ersten Endes Im Verhältnis zur Basis an der Ausrichtungsvorrichtung einstellbar ist.

6. Hilfsvorrichtung nach einem der Ansprüche 2 bis 5, in der das Rohr (19) eine elastische Dehnung von mindestens 200%, vorzugsweise mindestens 300%, aufweiset.

7. Hilfsvorrichtung nach einem der vorangehenden Ansprüche, die ferner ein System (17) zur Erzeugung von komprimiertem Gas umfasst.

8. Hilfsvorrichtung nach Anspruch 7, in dem das System zur Erzeugung von komprimiertem Gas umfasst:
- einen Kompressor (27), der angepasst ist, um ein komprimiertes Gas In Richtung des ersten Endes des Rohres zu leiten,
- ein Magnetventil (28), das einen geschlossenen Zustand, in dem das Gas im Rohr zurückgehalten wird, und einen offenen Zustand, in dem das Gas nach außen abgeleitet wird, annehmen kann und
- eine Steuereinheit (29, 30), die angepasst ist, um den Kompressor zu steuern, damit das komprimierte Gas In das Rohr geleitet und das Magnetventil In seinen geschlossenen Zustand versetzt wird, um das Gas Im Rohr zurückzuhalten.

9. Hilfsvorrichtung nach Anspruch 8, in der die Steuereinheit umfasst:
- einen Empfänger (30), der angepasst Ist, um einen Auslösebefehl von einem Nutzer zu empfangen, wobei der Empfänger angepasst Ist, um den Kompressor auszulösen, und
- einen Zeitschalter (29), wobei der Zeitschalter angepasst Ist, um die Öffnung des Magnetventils nach einer Zeit, in der eine ausreichende Ausdehnung des Rohrs erreicht wurde, zu steuern.

10. Hilfsvorrichtung nach Anspruch 9, in der der Empfänger (30) ein Funkempfänger ist und in der die Steuereinheit einen Funksender (31) umfasst, der mit dem Funkempfänger zusammenwirkt und vom Nutzer betätigt werden kann, um ein Steuersignal an den Funkempfänger zu senden.

11. Hilfsvorrichtung nach einem der Ansprüche 7 bis 10, in der das System (17) zur Erzeugung von komprimiertem Gas angepasst ist, um vom Stromkreis des Fahrzeugs mit Strom versorgt zu werden.

12. Kraftfahrzeug, das einen Fahrgastraum (2), mindestens einen Kraftfahrzeugsitz (4), einen Sicherheitsgurt (11) für den Sitz, mindestens eine Hilfsvorrichtung nach einem der vorangehenden Ansprüche umfasst, deren Basis (16) im Fahrgastraum befestigt ist, und bei der das zweite Ende des Rohres mit dem Sicherheitsgurt (11) verbunden Ist.

13. Fahrzeug nach Anspruch 12, in dem der Fahrgastraum eine steife Struktur (5) umfasst und in dem die Basis abnehmbar an der steifen Struktur befestigt Ist.

14. Kraftfahrzeug nach Anspruch 12 oder Anspruch 13, in dem der Fahrgastraum eine seitliche innere Stange (5) neben dem Fahrzeugsitz umfasst, wobei der Fahrzeugsitz nach vorn gerichtet ist, in dem die Basis an der seitlichen Inneren Stange (5) befestigt ist,
in dem ein erster, das erste Ende (19a) umfassender Abschnitt des Rohres hauptsächlich nach vom gerichtet Ist, und sich das Rohr in seiner Ruheposition hauptsächlich nach unten hin bis zu seinem zweiten, mit dem Gurt verbundenen Ende (19b) erstreckt,
in dem sich das Rohr In seiner Greifposition weiter vorn befindet als in seiner Ruheposition.

15. Kraftfahrzeug nach Anspruch 14, in dem der erste Abschnitt des Rohrs auch seitlich zum Fahrzeugäußeren gerichtet ist.

16. Kraftfahrzeug nach einem der Ansprüche 12 bis 15, in dem der Sicherheitsgurt einen auf einem Haltestift ruhenden Verschluss umfasst und in dem das zweite Ende des Rohres eine Schlaufe (23) umfasst, in die der Sicherheitsgurt eingerührt wird, wobei die Schlaufe auf dem Verschluss ruht, wenn der Sicherheitsgurt abgeschnallt ist.
